# EUROPÄISCHE PATENTANMELDUNG

(11) **EP 4 706 854 A1**
(43) Veröffentlichungstag der Anmeldung: **11.03.2026**
(21) Anmeldenummer: 25201029.3
(22) Anmeldetag: 09.09.2025
(51) Int. Cl.: B23B 51/06

(54) **ZERSPANUNGSWERKZEUG**

(30) Priorität: 10.09.2024 DE 102024125972
(71) Anmelder: Gühring KG, 72458 Albstadt (DE)
(72) Erfinder: Bitzer, Jochen, 72458 Albstad (DE)
(74) Vertreter: Winter, Brandl - Partnerschaft mbB

(57) **Zusammenfassung**

Zerspanungswerkzeug (30) mit einem sich entlang einer Werkzeugachse (4) erstreckenden Schaft (8), einem axial an den Schaft (8) anschließenden Schneidkopf (6) und einem innenliegenden Kühlschmiermittel-Kanalsystem gebildet aus einem zentral verlaufenden Eintrittskanal (12), der von einer Eintrittsöffnung (10) am Schaftende in Richtung Schneidkopf (6) bis zu einer Verzweigungsstelle (14) führt, die in einem definierten axialen Abstand zur Eintrittsöffnung (10) liegt, wenigstens einem dezentral verlaufenden Austrittskanal (18), der zu einer Austrittsöffnung (20) an der Schneidkopfstirnseite führt, und einem geradlinig verlaufenden Zweigkanal (16), der an der Verzweigungsstelle (14) vom Eintrittskanal (12) abzweigt und unter einem definierten Winkel zum Austrittskanal (18) führt. Eine entlang des wenigstens einen Zweigkanals (16) in Richtung des Schaftendes projizierte Querschnittsfläche des wenigstens einen Zweigkanals (16) liegt vollständig innerhalb der Eintrittsöffnung (10).

## Beschreibung

Die Erfindung betrifft ein Zerspanungswerkzeug mit einem sich entlang einer Werkzeugachse erstreckenden Schaft, einem axial an den Schaft anschließenden Schneidkopf und einem innenliegenden Kühlschmiermittel-Kanalsystem.

Die Versorgung eines Zerspanungswerkzeugs, z.B. eines Bohrwerkzeugs oder eines Fräswerkzeugs, mit Kühlschmiermittel ist von entscheidender Bedeutung für den Erfolg und die Effizienz von Zerspanungsprozessen. Kühlschmiermittel übernehmen mehrere wichtige Funktionen, die nicht nur die Qualität der Bearbeitung, sondern auch die Lebensdauer der Werkzeuge erheblich beeinflussen. Einerseits trägt das Kühlschmiermittel wesentlich zur Kühlung des Werkzeugs und des Werkstücks bei. Beim Bohren oder Fräsen entstehen durch Reibung erhebliche Mengen an Wärme, die zu einer Überhitzung des Werkzeugs führen, wodurch ein Verschleiß beschleunigt werden kann und Schneidkanten beschädigt werden können. Durch eine effektive Kühlung wird die Temperatur reduziert, was eine längere Standzeit des Werkzeugs gewährleistet und gleichzeitig das Werkstück vor thermischen Schäden schützt. Andererseits wirkt das Kühlschmiermittel als Schmiermittel, das Reibung zwischen dem Werkzeug und dem Werkstück reduziert, wodurch der Schneidvorgang erleichtert und die benötigte Schnittkraft verringert wird. Des Weiteren kann das Kühlschmiermittel den Abtransport der bei der spanabhebenden Bearbeitung anfallenden Späne erleichtern.

Aus dem Stand der Technik ist es bekannt, die Versorgung der Schneiden mit Kühlschmiermittel über ein werkzeuginternes Kühlschmiermittel-Kanalsystem durchzuführen. Ein innenliegendes Kühlschmiermittel-Kanalsystem kann sicherstellen, dass das Kühlschmiermittel direkt an die Schneiden des Werkzeugs geführt wird, wodurch die oben beschriebenen Vorteile sichergestellt werden können. Ein innenliegendes Kühlschmiermittel-Kanalsystem erhöht andererseits die Komplexität der Werkzeugkonstruktion. Die Kanäle müssen so ausgelegt sein, dass sie das Kühlschmiermittel effizient zu den Schneiden leiten, ohne die strukturelle Integrität des Werkzeugs zu beeinträchtigen. Dies erfordert fortschrittliche Fertigungstechniken, wie etwa das Tieflochbohren oder additive Fertigungsverfahren, z.B. 3D-Druck. Zum anderen sollte der Verlauf der Kanäle so gestaltet sein, dass das Kühlschmiermittel möglichst ungehindert und ohne große Druckverluste strömen kann.

Aus der Druckschrift DE 36 11 998 C2 ist ein Spiralbohrer mit innenliegenden Kühlkanälen bekannt, der aus separat vorgefertigten Teilen, einem Schneidteil mit Schneiden und Spannuten und einem Schaftteil, zusammengesetzt ist. Der Schneidteil weist zwei wendelförmig um eine Drehachse des Spiralbohrers verlaufende innenliegenden Kühlkanäle auf, die jeweils in einer Austrittsöffnung an der Stirnseite des Spiralbohrers münden. Der Schaftteil umfasst einen zentralen Kühlkanal mit einer Eintrittsöffnung an einem Schaftende. Im zusammengebauten Zustand des Spiralbohrers ist zwischen der der Bohrerspitze abgewandten Stirnseite des Schneidteils und einem Grund einer Ausnehmung des Schaftteils zur Aufnahme des Schneidteils ein Kühlkanalübergangselement angeordnet, das fluiddicht sowohl mit dem Schaftteil als auch mit dem Schneidteil verbunden ist. Das Kühlkanalübergangselement weist in einer Ausführungsform eine Verzweigung auf, die über zwei unter einem Winkel zur Drehachse verlaufenden Kühlkanalabschnitte eine Verbindung vom zentralen Kühlkanal des Schaftteils zu den wendelförmig verlaufenden Kühlkanälen im Schneidteil herstellt.

Nachteilig bei dem Spiralbohrer der DE 36 11 998 C2 ist der dreiteilige Aufbau aus Schneidteil, Kühlkanalübergangselement und Schaftteil, der eine Abdichtung zwischen den Elementen erfordert. Zum anderen ist an den Schnittstellen zwischen den Elementen eine präzise Fertigung der Kühlkanäle im Schneidteil und Kühlkanalübergangselement einerseits sowie eine korrekte Ausrichtung des Kühlkanalübergangselements relativ zum Schneidteil erforderlich, um zwischen den Kühlkanalabschnitten im Kühlkanalübergangselement und den Kanälen im Schneidteil bündige bzw. nahtlose Übergange auszubilden und Strömungsverluste zu vermeiden.

Die Druckschrift US 1409753 A offenbart einen zweiteilig aufgebauten Spiralbohrer mit einem Schneidteil und einem Schaftteil sowie einem innenliegenden Kühlschmiermittel-Kanalsystem. Der Schneidteil hat hierzu zwei parallel zu einer Drehachse verlaufende Kühlkanäle, die sich durch den gesamten Schneidteil erstrecken und in einer Stirnseite des Spiralbohrers münden. Schaftseitig sind die Kühlkanäle über zwei schräg verlaufende Kanäle miteinander verbunden, die von einer Verzweigungsstelle am schaftseitigen Ende des Schneidteils ausgehen. Der Schaftteil ist mit dem Schneidteil verschraubt und umfasst einen zentral verlaufenden Eintrittskanal, der im zusammengebauten Zustand des Spiralbohrers in der Verzweigungsstelle mündet.

Ausgehend von einem Spiralbohrer wie er aus der US 1409753 A bekannt ist, liegt der Erfindung die Aufgabe zugrunde, ein Zerspanungswerkzeug mit einem sich entlang einer Werkzeugachse erstreckenden Schaft, einem axial an den Schaft anschließenden Schneidkopf und einem innenliegenden Kühlschmiermittel-Kanalsystem zu schaffen, das sich einfach und kostengünstig herstellen lässt. Des Weiteren ist es Aufgabe der Erfindung, ein Verfahren zum Herstellen eines solchen Zerspanungswerkzeugs bereitzustellen.

Diese Aufgabe wird durch ein Zerspanungswerkzeug mit den Merkmalen des Anspruchs 1, ein Zerspanungswerkzeug mit den Merkmalen des Anspruchs 4, ein Verfahren zum Herstellen eines Zerspanungswerkzeugs mit den Merkmalen des Anspruchs 16 sowie ein Verfahren zum Herstellen eines Zerspanungswerkzeugs mit den Merkmalen des Anspruchs 17 gelöst. Vorteilhafte oder bevorzugte Weiterbildungen sind Gegenstand abhängiger Ansprüche.

Ein Zerspanungswerkzeug kann einen sich entlang einer Werkzeugachse erstreckenden Schaft, einen axial an den Schaft anschließenden Schneidkopf und ein innenliegendes Kühlschmiermittel-Kanalsystem gebildet aus einem zentral verlaufenden Eintrittskanal, der von einer Eintrittsöffnung am Schaftende in Richtung Schneidkopf bis zu einer Verzweigungsstelle führt, die in einem definierten axialen Abstand zur Eintrittsöffnung liegt, wenigstens einem dezentral verlaufenden Austrittskanal, der zu einer Austrittsöffnung an der Schneidkopfstirnseite führt, und einem geradlinig verlaufenden Zweigkanal umfassen, der an der Verzweigungsstelle vom Eintrittskanal abzweigt und unter einem definierten Winkel zum Austrittskanal führt. Eine entlang des wenigstens einen Zweigkanals in Richtung des Schaftendes projizierte Querschnittsfläche des wenigstens einen Zweigkanals kann vollständig innerhalb der Eintrittsöffnung liegen.

Bei dem Zerspanungswerkzeug kann es sich um jedes Werkzeug handeln, das eine spanabhebende Bearbeitung eines Werkstücks mittels einer oder mehrerer Schneiden durchführt. Insbesondere kann das Zerspanungswerkzeug ein Bohr- oder Fräswerkzeug sein, das eine oder mehrere Hauptschneiden oder Stirnschneiden aufweist. Der Schaft kann in gewöhnlicher Weise zum Einspannen des Werkzeugs in eine Maschinenspindel dienen. Zweckmäßig entspricht eine Anzahl der Austrittskanäle und Zweigkanäle einer Anzahl der Schneiden, die an der Schneidkopfstirnseite ausgebildet sein können, um eine zuverlässige Versorgung der Schneiden mit Kühlschmiermittel zu gewährleisten.

Gemäß dem Zerspanungswerkzeug kann eine entlang des wenigstens einen Zweigkanals in Richtung des Schaftendes projizierte Querschnittsfläche des wenigstens einen Zweigkanals vollständig innerhalb der Eintrittsöffnung liegen. Mit anderen Worten liegt eine gedachte Verlängerung des wenigstens einen geradlinig verlaufenden Zweigkanals vollständig innerhalb der Eintrittsöffnung. Der wenigstens eine Zweigkanal lässt sich dadurch mittels einer konventionellen Fertigungstechnik, z.B. Bohren, Fräsen oder Erodieren, von einem schaftseitigen Ende des Zerspanungswerkzeugs aus über die Eintrittsöffnung und durch den Eintrittskanal hindurch ausbilden. Das Zerspanungswerkzeug lässt sich dadurch einfach und kostengünstig herstellen. Es spielt dabei keine Rolle, in welcher Reihenfolge der Eintrittskanal, der wenigstens eine Zweigkanal und der wenigstens eine Austrittskanal ausgebildet werden. Je nach Länge des Schneidkopfs und des Schafts sowie dem definierten Winkel, unter dem der wenigstens eine Zweigkanal an der Verzweigungsstelle von Eintrittskanal abzweigt, kann die Verzweigungsstelle innerhalb des Schneidkopfs oder innerhalb des Schafts liegen.

In einer weiteren Ausführungsform ist das Zerspanungswerkzeug einteilig ausgebildet.

Eine einteilige Ausbildung des Zerspanungswerkzeugs, insbesondere des Schneidkopfs und des Schafts, vereinfacht die Herstellung des Werkzeugs. Das Zerspanungswerkzeug lässt sich beispielsweise aus einem Werkzeugrohling kostengünstig herstellen. Der einteilige Aufbau erhöht zudem die Stabilität des Zerspanungswerkzeugs. Dadurch, dass eine entlang des wenigstens einen Zweigkanals in Richtung des Schaftendes projizierte Querschnittsfläche des wenigstens einen Zweigkanals vollständig innerhalb der Eintrittsöffnung liegt, lässt sich auch bei einem einteiligen Aufbau das innenliegende Kühlschmiermittel-Kanalsystem, insbesondere der wenigstens eine geradlinig verlaufende Zweigkanal, mit konventionellen Fertigungsverfahren einfach und kostengünstig herstellen. Es entstehen innerhalb des Kühlschmiermittel-Kanalsystems keine Schnittstellen, die abgedichtet werden müssen. Dadurch wird die Strömung des Kühlschmiermittels verbessert und Druckverluste minimiert. Es ist jedoch auch möglich, dass das Zerspanungswerkzeug mittels eines additiven Herstellungsverfahren, z.B. 3D-Druck, einteilig ausgebildet ist.

In einer alternativen Ausführungsform ist das Zerspanungswerkzeug zweiteilig ausgebildet.

Eine zweiteilige Ausbildung des Zerspanungswerkzeugs ermöglicht eine zweckmäßige und vorteilhafte Verwendung unterschiedlicher Materialien für den Schneidkopf und den Schaft.

Ein Zerspanungswerkzeug kann einen sich entlang einer Werkzeugachse erstreckenden Schaft, einen an einer Fügestelle an den Schaft angefügten Schneidkopf und einen innenliegenden Kühlschmiermittel-Kanalsystem gebildet aus einem zentral verlaufenden Eintrittskanal, der über einen schaftseitigen Kanalabschnitt von einer Eintrittsöffnung am Schaftende bis zu einer Anschlussöffnung an der Fügestelle und über einen schneidkopfseitigen Kanalabschnitt von der Anschlussöffnung bis zu einer Verzweigungsstelle im Schneidkopf führt, wenigstens einem dezentral verlaufenden Austrittskanal, der zu einer Austrittsöffnung an der Schneidkopfstirnseite führt, und einem geradlinig verlaufenden Zweigkanal umfassen, der an der Verzweigungsstelle vom schaftseitigen Eintrittskanal abzweigt und unter einem definierten Winkel zum Austrittskanal führt. Die Verzweigungsstelle kann in einem definierten axialen Abstand zu der Anschlussöffnung liegen, und eine entlang des wenigstens einen Zweigkanals in Richtung des Schaftendes projizierte Querschnittsfläche des wenigstens einen Zweigkanals kann vollständig innerhalb der Anschlussöffnung liegen.

Bei dem Zerspanungswerkzeug kann es sich um jedes Werkzeug handeln, das eine spanabhebende Bearbeitung eines Werkstücks mittels einer oder mehrerer Schneiden durchführt. Insbesondere kann das Zerspanungswerkzeug ein Bohr- oder Fräswerkzeug sein, das eine oder mehrere Hauptschneiden oder Stirnschneiden aufweist. Der Schaft kann in gewöhnlicher Weise zum Einspannen des Werkzeugs in eine Maschinenspindel dienen. Zweckmäßig entspricht eine Anzahl der Austrittskanäle und Zweigkanäle einer Anzahl der Schneiden, die an der Schneidkopfstirnseite ausgebildet sein können, um eine zuverlässige Versorgung der Schneiden mit Kühlschmiermittel zu gewährleisten.

Gemäß dem Zerspanungswerkzeug kann eine entlang des wenigstens einen Zweigkanals in Richtung des Schaftendes projizierte Querschnittsfläche des wenigstens einen Zweigkanals vollständig innerhalb der Anschlussöffnung liegen. Mit anderen Worten liegt eine gedachte Verlängerung des wenigstens einen geradlinig verlaufenden Zweigkanals vollständig innerhalb der Anschlussöffnung, die sich an der Fügestelle zwischen Schneidkopf und Schaft befindet. Der wenigstens eine Zweigkanal lässt sich dadurch mittels einer konventionellen Fertigungstechnik, z.B. Bohren, Fräsen oder Erodieren, durch den Eintrittskanal hindurch ausbilden. Wenn der Schneidkopf aus einem Schneidkopfrohling mit einer im Vergleich zum Schneidkopf größeren Länge ausgebildet wird, lässt sich von einer Außenumfangsseite ausgehend der dem wenigstens einen Austrittskanal zugeordnete Zweigkanal durch den Eintrittskanal hindurch bohren, erodieren oder fräsen. Es spielt dabei keine Rolle, in welcher Reihenfolge der Eintrittskanal, der wenigstens eine Zweigkanal und der wenigstens eine Austrittskanal ausgebildet werden. Anschließend kann von dem so bearbeiteten Schneidkopfrohling an einer Stelle, die in einem axialen Abstand zu der Verzweigungsstelle liegt, an der der wenigstens eine Zweigkanal vom Eintrittskanal abzweigt, der später dem anzufügenden Schaft zugewandte Längenabschnitt abgetrennt werden. Die zweiteilige Ausbildung des Zerspanungswerkzeugs ermöglicht zweckmäßig die Verwendung unterschiedlicher Materialien für Schneidkopf und Schaft. Bei dem beschriebenen Zerspanungswerkzeug liegen der schneidkopfseitige Kanalabschnitt des Eintrittskanals, die Verzweigungsstelle, der wenigstens eine Zweigkanal und der wenigstens eine Austrittskanal innerhalb des Schneidkopfs.

In einer weiteren Ausführungsform verläuft der Eintrittskanal geradlinig, insbesondere axial entlang der Werkzeugachse.

Die geradlinige Ausbildung des Eintrittskanals, insbesondere axial entlang der Werkzeugachse, ist mittels konventioneller Fertigungsverfahren einfach herzustellen und im Sinne einer hohen Rundlaufgenauigkeit des Zerspanungswerkzeugs vorteilhaft.

In einer weiteren Ausführungsform verläuft der wenigstens eine Austrittskanal geradlinig, insbesondere parallel zur Werkzeugachse.

Die geradlinige Ausbildung des Austrittskanals, insbesondere parallel zur Werkzeugachse, ist mittels konventioneller Fertigungsverfahren einfach herzustellen. Im Sinne einer hohen Rundlaufgenauigkeit des Zerspanungswerkzeugs sind im Falle mehrerer Austrittskanäle die mehreren Austrittskanäle gleichmäßig um die Werkzeugachse herum verteilt angeordnet.

In einer alternativen Ausführungsform verläuft der wenigstens eine Austrittskanal gewendelt.

Die Wendelform kann für eine Turbulenz im Kühlschmiermittelstrom und dafür sorgen, dass das Kühlschmiermittel effizienter an an der Schneidkopfstirnseite ausgebildete Schneiden gelangen kann, wodurch eine Kühlwirkung verbessert werden kann. Zum anderen kann eine turbulente Kühlschmiermittelströmung die Reibung weiter verringern und den Späneabstransport erleichtern. Vorzugsweise wendelt sich der wenigstens eine Austrittskanal um eine parallel zur Werkzeugachse verlaufende Achse.

In einer weiteren Ausführungsform entspricht eine Kanalquerschnittsfläche des wenigstens einen Austrittskanals oder eine Summe aller Kanalquerschnittsflächen der Austrittskanäle einer Kanalquerschnittsfläche des Eintrittskanals.

Durch diese Ausgestaltung kann sichergestellt werden, dass innerhalb des Kühlschmiermittel-Kanalsystems eine gleichmäßige Strömung, insbesondere gleiche Strömungsgeschwindigkeiten innerhalb des Kanalsystems, erzielt wird. Die Schneide oder die Schneiden des Zerspanungswerkzeugs kann/können konstant und zuverlässig mit Kühlschmiermittel versorgt werden. Des Weiteren sorgt die gleichmäßige Strömung des Kühlschmiermittels für einen sicheren Abtransport der Späne.

Insbesondere, wenn das Zerspanungswerkzeug zweiteilig ausgebildet ist, kann der Schaft aus Stahl gebildet sein.

Stahl eignet sich als kostengünstiger Werkstoff für den Schaft aufgrund seiner Härte, Verschleiß- und Bruchfestigkeit sowie Zähigkeit insbesondere für denjenigen Abschnitt des Schafts, der in eine Maschinenspindel einspannbar ist.

Entsprechend dazu kann, wenn das Zerspanungswerkzeug zweiteilig ausgebildet ist, der Schneidkopf aus Vollhartmetall gebildet sein.

Die Verwendung von Vollhartmetall für den Schneidkopf, insbesondere für die Schneiden des Schneidkopfs, ermöglicht aufgrund seiner Eigenschaften einer hohen Härte, hohen Verschleißfestigkeit, hohen Wärmebeständigkeit und geringen Wärmeausdehnung die Durchführung anspruchsvoller Zerspanungsprozesse bei gleichzeitig hohen Standzeiten des Zerspanungswerkzeugs.

In einer weiteren Ausführungsform weist der Schneidkopf Hauptschneiden, Nebenschneiden, Spannuten und Freiflächen auf und liegt die wenigstens eine Austrittsöffnung zumindest teilweise in einer Freifläche.

Die Hauptschneiden können sich in bekannter Weise an der Stirnseite des Zerspanungswerkzeugs von einer Querschneide radial nach außen bis zu einer Schneidenecke erstrecken und an dieser Stelle in eine Nebenschneide übergehen, die sich geradlinig oder wendelförmig entlang einer Spannut in Richtung des Schafts erstreckt. Jede Hauptschneide kann durch eine Schnittlinie einer in die Spannut übergehenden Spanfläche sowie eine Freifläche gebildet sein. Vorzugsweise entspricht die Anzahl der Austrittskanäle bzw. Austrittsöffnungen der Anzahl der Hauptschneiden. Wenn die Austrittsöffnung zumindest teilweise in der Freifläche liegt, wird eine an der Spanfläche stattfindende Spanbildung und ein Spanabfluss innerhalb der Spannut weniger behindert. Vorteilhaft liegt die Austrittsöffnung daher vollständig innerhalb der Freifläche.

Für den Fall, dass das Zerspanungswerkzeug zweiteilig ausgebildet ist, kann der Schaft am Schneidkopf angelötet sein.

Es sind jedoch auch andere alternative Verbindungsmethoden möglich, die eine sichere und dauerhafte Verbindung zwischen Schneidkopf und Schaft sowie eine Abdichtung des Kühlschmiermittel-Kanalsystems nach außen hin ermöglichen, beispielsweise eine Schweiß- oder Klebeverbindung.

In einer weiteren Ausführungsform weist der Schneidkopf an seinem schaftseitigen Ende einen konischen Zapfen, und der Schaft an seinem schneidkopfseitigen Ende einen Aufnahmekonus auf, der den konischen Zapfen aufnimmt.

Eine aus Zapfen und Aufnahmekonus gebildete Flächenpaarung erleichtert eine Zentrierung des Schneidkopfs gegenüber dem Schaft. Des Weiteren ist eine Fügestellenfläche des Schneidkopfs am Schaft verglichen mit einer beispielsweise kreisförmigen oder kreisringförmigen Fügestellenfläche größer, so dass die Sicherheit und Stabilität einer Verbindung zwischen Schneidkopf und Schaft erhöht werden kann.

In einer weiteren Ausführungsform erstreckt sich der wenigstens eine Austrittskanal axial durch den gesamten Schneidkopf, insbesondere durch das gesamte Zerspanungswerkzeug.

Unabhängig davon, ob das Zerspanungswerkzeug einteilig oder zweiteilig ausgebildet ist, wird dessen Herstellung erleichtert, wenn sich der wenigstens eine Austrittskanal axial durch den gesamten Schneidkopf, insbesondere durch das gesamte Zerspanungswerkzeug, erstreckt, da der wenigstens eine Austrittskanal mit bekannten Herstellungsverfahren zur Ausbildung von Durchgangslöchern in einem Schneidkopfrohling oder einem einteilig ausgebildeten Zerspanungswerkzeug einfach ausgebildet werden kann. Nach der Ausbildung des wenigstens einen Austrittskanals verbleibende Späne oder Materialrückstände können aus dem durchgehenden Austrittskanal einfach entfernt werden.

In einer alternativen Ausführungsform schließen der wenigstens eine Austrittskanal und der zum Austrittskanal führende Zweigkanal nahtlos aneinander an.

Vorzugsweise schließen auch der Eintrittskanal und der wenigstens eine Zweigkanal nahtlos aneinander an. Somit kann ein geschlossenes Kühlschmiermittel-Kanalsystem gebildet werden, das bezogen auf das Zerspanungswerkzeug nur an der Eintrittsöffnung und an der Austrittsöffnung nach außen hin offen ist, wodurch innerhalb des Kühlschmiermittel-Kanalsystems eine konstante gleichbleibende Strömung ohne Druckverluste erzielt werden kann.

In einem Verfahren zum Herstellen eines Zerspanungswerkzeugs nach einem der obigen Aspekte kann der dem wenigstens einen Austrittkanal zugeordnete Zweigkanal durch die Eintrittsöffnung und den Eintrittskanal hindurch in den Schaft gebohrt, erodiert oder gefräst werden.

Bei dem Zerspanungswerkzeug kann es sich insbesondere um ein einteilig ausgebildetes Zerspanungswerkzeug handeln, wobei der Eintrittskanal zur Ausbildung des innenliegenden Kühlschmiermittel-Kanalsystems zuerst ausgebildet wird. Anschließend wird der dem wenigstens einen Austrittkanal zugeordnete Zweigkanal durch die Eintrittsöffnung und den Eintrittskanal hindurch in den Schaft gebohrt, erodiert oder gefräst. Der Austrittskanal kann dabei schon vorhanden sein oder nach der Ausbildung des Zweigkanals mit einem geeigneten Verfahren, z.B. Bohren, Fräsen oder Erodieren, im Schneidkopf ausgebildet werden. Gemäß dem Zerspanungswerkzeug liegt eine entlang des wenigstens einen Zweigkanals in Richtung des Schaftendes projizierte Querschnittsfläche des wenigstens einen Zweigkanals vollständig innerhalb der Eintrittsöffnung. Folglich lässt sich der wenigstens eine Zweigkanal mittels einer konventionellen Fertigungstechnik wie Bohren, Fräsen oder Erodieren, von einem schaftseitigen Ende des Zerspanungswerkzeugs aus durch die Eintrittsöffnung und den Eintrittskanal ausbilden. Das Herstellungsverfahren ist dadurch einfach und kostengünstig.

In einem weiteren Verfahren zum Herstellen eines Zerspanungswerkzeugs nach einem der obigen Aspekte kann in einen Schneidkopfrohling von einer Außenumfangsseite ausgehend der dem wenigstens einen Austrittskanal zugeordnete Zweigkanal durch den Eintrittskanal hindurch gebohrt, erodiert oder gefräst werden, von dem so bearbeiteten Schneidkopfrohling zur Ausbildung der Fügestellenfläche am Schneidkopf ein Längenabschnitt abgetrennt werden, und an die so gebildete Fügestellenfläche des Schneidkopfs der Schaft angefügt werden.

Bei dem Zerspanungswerkzeug handelt es sich um ein zweiteilig ausgebildetes Zerspanungswerkzeug, wobei der Eintrittskanal zur Ausbildung des innenliegenden Kühlschmiermittel-Kanalsystems in dem Schneidkopfrohling zuerst ausgebildet wird. Anschließend wird der dem wenigstens einen Austrittkanal zugeordnete Zweigkanal von einer Außenumfangsseite ausgehend durch den Eintrittskanal hindurch gebohrt, erodiert oder gefräst. Der Austrittskanal kann dabei im Schneidkopfrohling schon vorhanden sein oder nach der Ausbildung des Zweigkanals mit einem geeigneten Verfahren, z.B. Bohren, Fräsen oder Erodieren, im Schneidkopfrohling ausgebildet werden. Die zweiteilige Ausbildung des Zerspanungswerkzeugs ermöglicht zweckmäßig die Verwendung unterschiedlicher Materialien für Schneidkopf und Schaft bei gleichzeitig einfacher und kostengünstiger Herstellung aus Ausbildung des innenliegenden Kühlschmiermittel-Kanalsystems. Bei dem beschriebenen Zerspanungswerkzeug liegen der schneidkopfseitige Kanalabschnitt des Eintrittskanals, die Verzweigungsstelle, der wenigstens eine Zweigkanal und der wenigstens eine Austrittskanal innerhalb des Schneidkopfs.

Die oben diskutierten und weitere Merkmale werden im Folgenden anhand der beiliegenden Figuren am Beispiel von zwei Ausführungsformen eines Zerspanungswerkzeugs näher erläutert.
Fig. 1 zeigt eine Seitenansicht eines Rohlings eines Zerspanungswerkzeugs einer ersten Ausführungsform,
Fig. 2 zeigt eine Vorderansicht des Rohlings von Fig. 1,
Fig. 3 zeigt eine Seitenansicht des Zerspanungswerkzeugs der ersten Ausführungsform,
Fig. 4 zeigt eine Vorderansicht des Zerspanungswerkzeugs von Fig. 3,
Fig. 5 zeigt eine perspektivische Ansicht des Zerspanungswerkzeugs von Fig. 3,
Fig. 6 zeigt eine Seitenansicht eines Schneidkopfrohlings eines Zerspanungswerkzeugs einer zweiten Ausführungsform sowie eine Schnittansicht an einer auszubildenden Fügestelle des Schneidkopfs,
Fig. 7 zeigt eine Vorderansicht des Schneidkopfrohlings von Fig. 6,
Fig. 8 zeigt eine Seitenansicht eines Schneidkopfs des Zerspanungswerkzeugs der zweiten Ausführungsform,
Fig. 9 zeigt eine Vorderansicht des Schneidkopfs von Fig. 8, und
Fig. 10 zeigt eine perspektivische Ansicht des Schneidkopfs von Fig. 8.

Die Figuren sind lediglich schematischer Natur und dienen ausschließlich dem Verständnis der Offenbarung. Die Größenverhältnisse der in den Figuren dargestellten Elemente sind entsprechend angepasst, um die Offenbarung verständlicher zu machen.

### Erste Ausführungsform

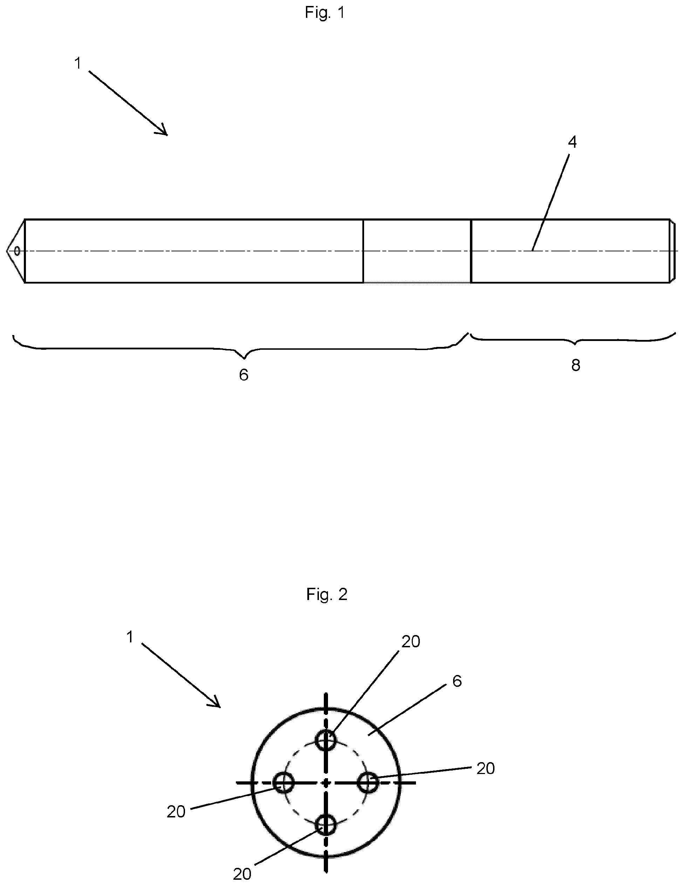

Die Fig. 1 bis 5 zeigen ein Zerspanungswerkzeug 30 gemäß einer ersten Ausführungsform bzw. einen Zerspanungswerkzeugrohling 1 zur Herstellung des Zerspanungswerkzeugs 30. Das Zerspanungswerkzeug 30 ist einteilig ausgebildet und weist einen sich entlang einer Werkzeugachse 4 erstreckenden Schaft 8 zum Einspannen in eine Maschinenspindel, einen axial an den Schaft 8 anschließenden Schneidkopf 6 und ein innenliegendes Kühlschmiermittel-Kanalsystem auf. Das Zerspanungswerkzeug 30 ist in der ersten Ausführungsform als Bohrwerkzeug ausgeführt und hat an einem stirnseitigen Ende vier gestufte Hauptschneiden 22, die sich jeweils von einer Bohrermitte radial nach außen bis zu einer Schneidenecke erstrecken und in eine Nebenschneide 24 übergehen, die sich axial in Richtung Schaft 8 erstreckt. An jede Hauptschneide 22 grenzt entgegen der Drehrichtung des Bohrwerkzeugs eine gestufte Freifläche 26 an. Ausgehend von jeder Hauptschneide 22 erstreckt sich eine geradlinige Spannut 26 entlang der zugehörigen Nebenschneide 24 in Richtung des Schafts 8.

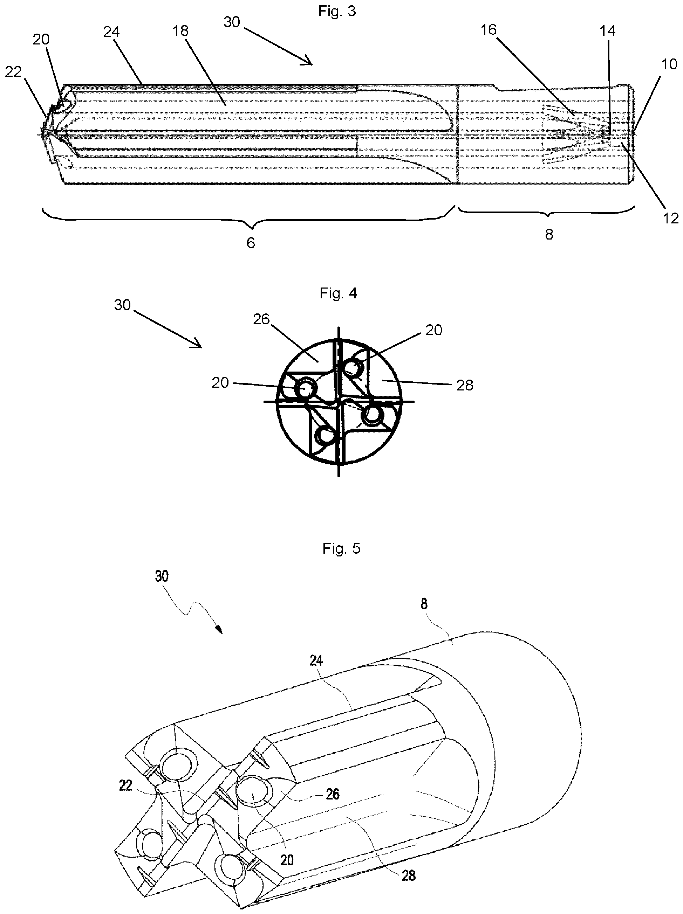

Das Kühlschmiermittel-Kanalsystem ist in der Seitenansicht von Fig. 3 mit gestrichtelten Linien dargestellt. Ausgehend von einer Eintrittsöffnung 10 am schaftseitigen Ende des Zerspanungswerkzeugs 30 führt ein entlang der Werkzeugachse 4 zentral verlaufender Eintrittskanal 12 in Richtung Schneidkopf 6 bis zu einer Verzweigungsstelle 14, die in einem definierten axialen Abstand zur Eintrittsöffnung 10 liegt. An der Verzweigungsstelle 14 teilt sich der Eintrittskanal 12 in vier unter einem definierten Winkel zur Werkzeugachse 4 geradlinig verlaufende Zweigkanäle 16 auf. Jeder Zweigkanal 16 mündet in einem dezentral verlaufenden Austrittskanal 18. Die Austrittskanäle 18 erstrecken sich axial durch das gesamte Zerspanungswerkzeug 30 und sind gleichmäßig um die Werkzeugachse 4 herum verteilt. Jeder Austrittskanal 18 mündet an der Schneidkopfstirnseite in einer Austrittsöffnung 20, aus der das Kühlschmiermittel aus dem Kühlschmiermittel-Kanalsystem austreten und zur Kühlung und Schmierung insbesondere der Hauptschneiden 22 dienen kann.

Zur Herstellung des Kühlschmiermittel-Kanalsystems werden in der ersten Ausführungsform zunächst die Austrittskanäle 18 durch den Zerspanungswerkzeugrohling 1 gebohrt, gefräst oder erodiert. In Fig. 2 sind bereits die an der Stirnseite des Zerspanungswerkzeugrohlings 1 ausgebildeten Austrittsöffnungen 20 der Austrittskanäle 18 zu erkennen. Der zentrale Eintrittskanal 12 wird von der Schaftseite des Zerspanungswerkzeugrohlings 1 aus über eine definierte Länge bis zu der Verzweigungsstelle 14 gebohrt, gefräst oder erodiert, wodurch die Eintrittsöffnung 10 des Eintrittskanals 12 ausgebildet wird. Anschließend werden die Zweigkanäle 16 durch die Eintrittsöffnung 10 und den Eintrittskanal 12 hindurch in den Schaft 8 bis zu den Austrittskanälen 18 gebohrt, gefräst oder erodiert. Bei der Ausbildung der Zweigkanäle 16 wird der Eintrittskanal 12 nicht weiter vergrößert. Im Ergebnis liegt eine entlang jedes Zweigkanals 16 in Richtung des Schaftendes projizierte Querschnittsfläche des Zweigkanals 16 vollständig innerhalb der Eintrittsöffnung 10. Die Zweigkanäle 16 sind strömungstechnisch vorteilhaft so ausgerichtet, dass sich in Axialrichtung des Zerspanungswerkzeugs 30 vom Schaftende in Richtung Schneidkopf 6 betrachtet an der Verzweigungsstelle 14 zwischen den Zweigkanälen 16 ein möglichst nahtloser Übergang vom Eintrittskanal 12 in die Zweigkanäle 16 ergibt. Mit anderen Worten überschneiden sich die Zweigkanäle 16 an der Verzweigungsstelle 14 so, dass das vom Eintrittskanal 12 in Richtung der Austrittskanäle 18 strömende Kühlschmiermittel an der Verzweigungsstelle 14 im Bereich der Werkzeugachse 4 auf eine sehr kleine Fläche, insbesondere auf einen im Wesentlichen punktförmigen Aufprallpunkt, von Schaftmaterial stößt und außerhalb des Aufprallpunkts in einen der Zweigkanäle 16 strömt.

Die Summe der Kanalquerschnittsflächen der Austrittskanäle 18 als auch die Summe der Kanalquerschnittsflächen der Zweigkanäle 16 entspricht einer Kanalquerschnittsfläche des Eintrittskanals 12. Durch diese Ausgestaltung kann sichergestellt werden, dass innerhalb des Kühlschmiermittel-Kanalsystems eine gleichmäßige Strömung, insbesondere gleiche Strömungsgeschwindigkeiten innerhalb des Kanalsystems, erreicht wird. Die Hauptschneiden 22 des Zerspanungswerkzeugs 30 können konstant und zuverlässig mit Kühlschmiermittel versorgt werden.

Wie insbesondere in Fig. 5 gezeigt ist, liegt jede Austrittsöffnung 20 vollständig innerhalb einer gestuften Freifläche 26 wodurch eine an einer Spanfläche stattfindende Spanbildung und ein Spanabfluss in der Spannut 28 nicht behindert wird.

### Zweite Ausführungsform

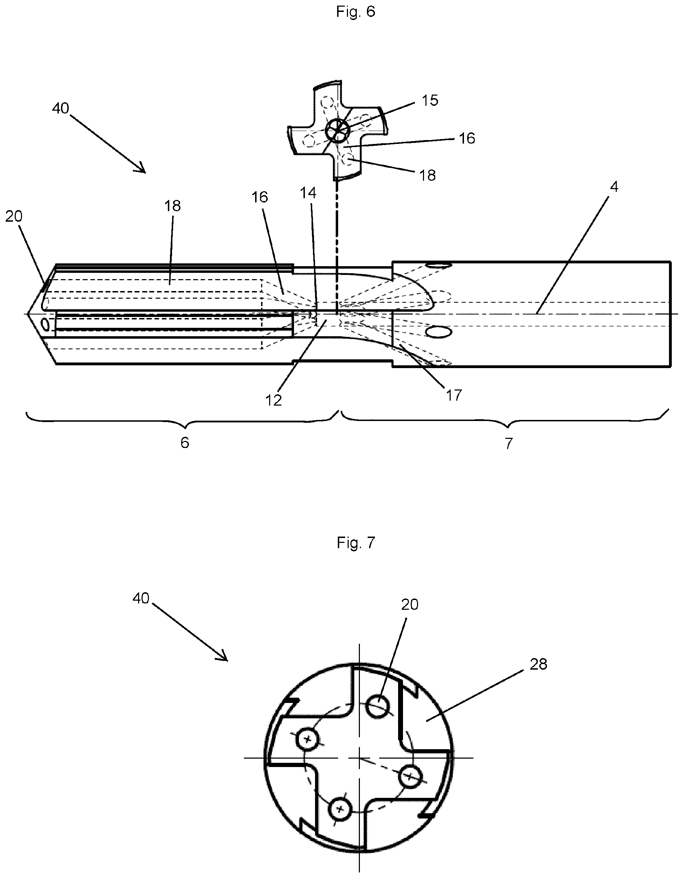

Die Fig. 6 bis 10 zeigen den Schneidkopf 6 eines Zerspanungswerkzeugs gemäß einer zweiten Ausführungsform bzw. einen Schneidkopfrohling 40 zur Herstellung des Schneidkopfs 6. Elemente, die strukturell und/oder funktional Elementen der ersten Ausführungsform entsprechen, sind mit demselben Bezugszeichen gekennzeichnet. Im Folgenden wird insbesondere auf die Unterschiede zur ersten Ausführungsform eingegangen.

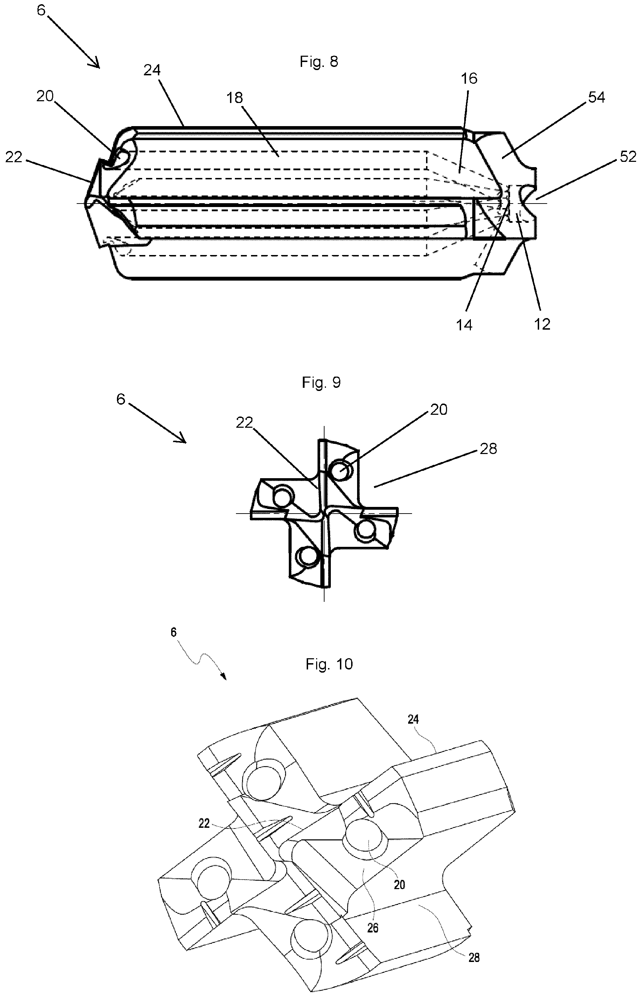

Das Zerspanungswerkzeug gemäß der zweiten Ausführungsform ist zweiteilig ausgebildet, wobei in den Fig. 8 bis 10 nur der Schneidkopf 6 des Zerspanungswerkzeugs gezeigt ist, der aus dem in Fig. 6 und 7 gezeigten Schneidkopfrohling 40 hergestellt wird. Der in Fig. 6 dargestellte Schneidkopfrohling 40 umfasst in axialer Richtung den Schneidkopf 6 sowie einen abzutrennenden Längenabschnitt 7.

Zur Herstellung des Kühlschmiermittel-Kanalsystems innerhalb des Schneidkopfs 6 werden in der zweiten Ausführungsform zunächst die Austrittskanäle 18 in Form von Sacklochbohrungen von der Werkzeugstirnseite in den Schneidkopfrohling 40 gebohrt, gefräst oder erodiert. In Fig. 7 sind bereits die an der Stirnseite des Schneidkopfrohlings 40 ausgebildeten Austrittsöffnungen 20 der Austrittskanäle 18 zu erkennen. Der zentrale Eintrittskanal 12 wird von der Schaftseite des Schneidkopfrohlings 40 aus über eine definierte Länge bis zur Verzweigungsstelle 14 gebohrt, gefräst oder erodiert. Anschließend werden die Zweigkanäle 16 von einer Außenumfangsseite ausgehend durch Eintrittskanal 12 hindurch bis zu den Austrittskanälen 18 gebohrt, gefräst oder erodiert (siehe die Zweigkanalbohrung 17 in Fig. 6). In der zweiten Ausführungsform ergibt sich ein nahtloser Anschluss bzw. Übergang von den Zweigkanälen 16 in die Austrittskanäle 18.

Von dem so bearbeiteten Schneidkopfrohling 40 wird der Längenabschnitt 7 abgetrennt und der in Fig. 8 gezeigte Schneidkopf 6 erhalten. Durch die Abtrennung des Längenabschnitts 7 wird eine Fügestelle 54 bzw. Fügestellenfläche mit einer Anschlussöffnung 52 innerhalb des Eintrittskanals 12 gebildet. Die Fügestelle 54 hat die Form eines konischen Zapfens, der von einem entsprechend ausgebildeten Aufnahmekonus eines Schafts aufgenommen wird, wenn der Schneidkopf 6 an dem Schaft angefügt wird. Wie des Weiteren in Fig. 8 gezeigt ist, liegt in der zweiten Ausführungsform die Verzweigungsstelle 14 in einem definierten axialen Abstand zu der Anschlussöffnung 52, und eine entlang des Zweigkanals 16 in Richtung des Schaftendes projizierte Querschnittsfläche des Zweigkanals 16 vollständig innerhalb der Anschlussöffnung 52.

Die Zweigkanäle 16 sind strömungstechnisch vorteilhaft so ausgerichtet, dass sich in Axialrichtung des Zerspanungswerkzeugs vom Schaftende in Richtung Schneidkopf 6 betrachtet an der Verzweigungsstelle 14 zwischen den Zweigkanälen 16 ein möglichst nahtloser Anschluss bzw. Übergang vom Eintrittskanal 12 in die Zweigkanäle 16 ergibt. Mit anderen Worten überschneiden sich die Zweigkanäle 16 an der Verzweigungsstelle 14 so, dass das vom Eintrittskanal 12 in Richtung der Austrittskanäle 18 strömende Kühlschmiermittel an der Verzweigungsstelle 14 im Bereich der Werkzeugachse 4 auf eine sehr kleine Fläche, insbesondere auf einen im Wesentlichen punktförmigen Aufprallpunkt, von Schaftmaterial stößt und außerhalb des Aufprallpunkts in einen der Zweigkanäle 16 strömt. In der in Fig. 6 oben dargestellten Schnittansicht an der auszubildenden Fügestelle 54 bzw. Anschlussöffnung 52 ist der Aufprallpunkt mit dem Bezugszeichen 15 kenntlich gemacht.

### Alternative Ausführungsformen

In der ersten Ausführungsform ist das Zerspanungswerkzeug einteilig ausgebildet. Das Zerspanungswerkzeug kann jedoch auch zweiteilig ausgebildet sein und zwischen Schneidkopf und Schaft eine Fügestelle haben. Des Weiteren erstrecken sich die Austrittskanäle durch das gesamte Zerspanungswerkzeug. Es ist alternativ dazu auch möglich, dass sich jeder Austrittskanal ausgehend von der Werkzeugstirnseite bis zu einem zugeordneten Zweigkanal erstreckt und nahtlos an den Zweigkanal anschließt.

In der zweiten Ausführungsform schließen die Zweigkanäle nahtlos an die Austrittskanäle an. Die Austrittskanäle können sich jedoch auch durch den gesamten Schneidkopf erstrecken.

### Bezugszeichenliste

- 1: Zerspanungswerkzeugrohling
- 4: Werkzeugachse
- 6: Schneidkopf
- 7: abzutrennender Längenabschnitt
- 8: Schaft
- 10: Eintrittsöffnung
- 12: Eintrittskanal
- 14: Verzweigungsstelle
- 15: Aufprallpunkt
- 16: Zweigkanal
- 17: Zweigkanalbohrung
- 18: Austrittskanal
- 20: Austrittsöffnung
- 22: Hauptschneide
- 24: Nebenschneide
- 26: Freifläche
- 28: Spannut
- 30: Zerspanungswerkzeug
- 40: Schneidkopfrohling
- 52: Anschlussöffnung
- 54: Fügestelle

## Patentansprüche

1. Zerspanungswerkzeug (30) mit einem sich entlang einer Werkzeugachse (4) erstreckenden Schaft (8), einem axial an den Schaft (8) anschließenden Schneidkopf (6) und einem innenliegenden Kühlschmiermittel-Kanalsystem gebildet aus einem zentral verlaufenden Eintrittskanal (12), der von einer Eintrittsöffnung (10) am Schaftende in Richtung Schneidkopf (6) bis zu einer Verzweigungsstelle (14) führt, die in einem definierten axialen Abstand zur Eintrittsöffnung (10) liegt, wenigstens einem dezentral verlaufenden Austrittskanal (18), der zu einer Austrittsöffnung (20) an der Schneidkopfstirnseite führt, und einem geradlinig verlaufenden Zweigkanal (16), der an der Verzweigungsstelle (14) vom Eintrittskanal (12) abzweigt und unter einem definierten Winkel zum Austrittskanal (18) führt, **dadurch gekennzeichnet, dass**
eine entlang des wenigstens einen Zweigkanals (16) in Richtung des Schaftendes projizierte Querschnittsfläche des wenigstens einen Zweigkanals (16) vollständig innerhalb der Eintrittsöffnung (10) liegt.

2. Zerspanungswerkzeug (30) nach Anspruch 1, **dadurch gekennzeichnet, dass** das Zerspanungswerkzeug (30) einteilig ausgebildet ist.

3. Zerspanungswerkzeug (30) nach Anspruch 1, **dadurch gekennzeichnet, dass** das Zerspanungswerkzeug (30) zweiteilig ausgebildet ist.

4. Zerspanungswerkzeug mit einem sich entlang einer Werkzeugachse (4) erstreckenden Schaft (8), einem an einer Fügestelle (54) an den Schaft (8) angefügten Schneidkopf (6) und einem innenliegenden Kühlschmiermittel-Kanalsystem gebildet aus einem zentral verlaufenden Eintrittskanal (12), der über einen schaftseitigen Kanalabschnitt von einer Eintrittsöffnung (10) am Schaftende bis zu einer Anschlussöffnung (52) an der Fügestelle (54) und über einen schneidkopfseitigen Kanalabschnitt von der Anschlussöffnung (52) bis zu einer Verzweigungsstelle (14) im Schneidkopf (6) führt, wenigstens einem dezentral verlaufenden Austrittskanal (18), der zu einer Austrittsöffnung (20) an der Schneidkopfstirnseite führt, und einem geradlinig verlaufenden Zweigkanal (16), der an der Verzweigungsstelle (14) vom schaftseitigen Eintrittskanal abzweigt und unter einem definierten Winkel zum Austrittskanal (18) führt, **dadurch gekennzeichnet, dass**
die Verzweigungsstelle (14) in einem definierten axialen Abstand zu der Anschlussöffnung (52) liegt, und
eine entlang des wenigstens einen Zweigkanals (16) in Richtung des Schaftendes projizierte Querschnittsfläche des wenigstens einen Zweigkanals (16) vollständig innerhalb der Anschlussöffnung (52) liegt.

5. Zerspanungswerkzeug (30) nach einem der vorhergehenden Ansprüche, **dadurch gekennzeichnet, dass** der Eintrittskanal (12) geradlinig, insbesondere axial entlang der Werkzeugachse (4), verläuft.

6. Zerspanungswerkzeug (30) nach einem der vorhergehenden Ansprüche, **dadurch gekennzeichnet, dass** der wenigstens eine Austrittskanal (18) geradlinig, insbesondere parallel zur Werkzeugachse (4), verläuft.

7. Zerspanungswerkzeug (30) nach einem der Ansprüche 1 bis 5, **dadurch gekennzeichnet, dass** der wenigstens eine Austrittskanal (18) gewendelt verläuft.

8. Zerspanungswerkzeug (30) nach einem der vorhergehenden Ansprüche, **dadurch gekennzeichnet, dass** eine Kanalquerschnittsfläche des wenigstens einen Austrittskanals (18) oder eine Summe aller Kanalquerschnittsflächen der Austrittskanäle (18) einer Kanalquerschnittsfläche des Eintrittskanals (12) entspricht.

9. Zerspanungswerkzeug (30) nach einem der vorhergehenden Ansprüche, **dadurch gekennzeichnet, dass** der Schaft (8) aus Stahl gebildet ist.

10. Zerspanungswerkzeug (30) nach einem der vorhergehenden Ansprüche, **dadurch gekennzeichnet, dass** der Schneidkopf (6) aus Vollhartmetall gebildet ist.

11. Zerspanungswerkzeug (30) nach einem der vorhergehenden Ansprüche, **dadurch gekennzeichnet, dass** der Schneidkopf (6) Hauptschneiden (22), Nebenschneiden (24), Spannuten (28) und Freiflächen (26) aufweist und die Austrittsöffnung (20) des wenigstens einen Austrittskanals (18) zumindest teilweise in einer Freifläche (26) liegt.

12. Zerspanungswerkzeug nach einem der vorhergehenden Ansprüche, **dadurch gekennzeichnet, dass** der Schaft (8) am Schneidkopf (6) angelötet ist.

13. Zerspanungswerkzeug (30) nach einem der Ansprüche 4 bis 12, **dadurch gekennzeichnet, dass** der Schneidkopf (6) an seinem schaftseitigen Ende einen konischen Zapfen aufweist, und der Schaft (8) an seinem schneidkopfseitigen Ende einen Aufnahmekonus aufweist, der den konischen Zapfen aufnimmt.

14. Zerspanungswerkzeug (30) nach einem der vorhergehenden Ansprüche, **dadurch gekennzeichnet, dass** sich der wenigstens eine Austrittskanal (18) axial durch den gesamten Schneidkopf (6), insbesondere durch das gesamte Zerspanungswerkzeug (30), erstreckt.

15. Zerspanungswerkzeug nach einem der Ansprüche 1 bis 13, **dadurch gekennzeichnet, dass** der wenigstens eine Austrittskanal (18) und der zum Austrittskanal (18) führende Zweigkanal (16) nahtlos aneinander anschließen.

16. Verfahren zum Herstellen eines Zerspanungswerkzeugs (30) nach einem der Ansprüche 1 bis 3, **dadurch gekennzeichnet, dass** der dem wenigstens einen Austrittskanal (18) zugeordnete Zweigkanal (16) durch die Eintrittsöffnung (10) und den Eintrittskanal (12) hindurch in den Schaft (8) gebohrt, erodiert oder gefräst wird.

17. Verfahren zum Herstellen eines Zerspanungswerkzeugs nach einem der Ansprüche 4 bis 15, **dadurch gekennzeichnet, dass**
in einen Schneidkopfrohling (40) von einer Außenumfangsseite ausgehend der dem wenigstens einen Austrittskanal (18) zugeordnete Zweigkanal (16) durch den Eintrittskanal (12) hindurch gebohrt, erodiert oder gefräst wird,
von dem so bearbeiteten Schneidkopfrohling (40) zur Ausbildung der Fügestellenfläche am Schneidkopf (6) ein Längenabschnitt (7) abgetrennt wird, und
an die so gebildete Fügestellenfläche des Schneidkopfs der Schaft (8) angefügt wird.
